(19) Europäisches Patentamt / European Patent Office / Office européen des brevets

(11) **EP 3 372 379 B1**

(12) **EUROPEAN PATENT SPECIFICATION**

(45) Date of publication and mention
of the grant of the patent:
**31.03.2021 Bulletin 2021/13**

(21) Application number: **16861833.8**

(22) Date of filing: **02.09.2016**

(51) Int Cl.:
**B29C 44/08** (2006.01)        **B29C 44/34** (2006.01)
**B29C 45/56** (2006.01)        **B29C 45/26** (2006.01)
**C08J 9/12** (2006.01)          **B29C 44/58** (2006.01)
**B29C 44/06** (2006.01)        B29K 23/00 (2006.01)
B29K 67/00 (2006.01)          B29K 105/04 (2006.01)

(86) International application number:
**PCT/JP2016/075855**

(87) International publication number:
**WO 2017/077764 (11.05.2017 Gazette 2017/19)**

(54) **MOLDED-FOAM PRODUCTION PROCESS AND MOLDED FOAM**

VERFAHREN ZUR HERSTELLUNG VON FORMSCHAUM UND FORMSCHAUM

PROCÉDÉ DE PRODUCTION DE MOUSSE MOULÉE ET MOUSSE MOULÉE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **06.11.2015 JP 2015218591**

(43) Date of publication of application:
**12.09.2018 Bulletin 2018/37**

(73) Proprietor: **Bando Chemical Industries, Ltd.
Kobe-shi, Hyogo 650-0047 (JP)**

(72) Inventors:
• **JINDAI, Saki
Kobe-shi
Hyogo 650-0047 (JP)**
• **ICHIKI, Tomohito
Kobe-shi
Hyogo 650-0047 (JP)**

(74) Representative: **Cabinet Beau de Loménie
158, rue de l'Université
75340 Paris Cedex 07 (FR)**

(56) References cited:
**EP-A1- 3 272 797        WO-A1-2011/001791
JP-A- 2003 170 432      JP-A- 2010 111 437
JP-A- 2012 233 055      JP-A- 2013 173 233
JP-A- 2014 156 073      US-A1- 2014 077 406**

**Description**

TECHNICAL FIELD

The present invention relates to methods for manufacturing a molded foam product and molded foam products.

BACKGROUND ART

Molded foam products are featured with, for example, a light weight, reduced amounts of materials used, and excellent heat insulation. Molded foam products are therefore used in various applications such as food containers, daily necessities, and home appliances.

Molded foam products can be typically manufactured by causing a resin composition injected into a mold to foam while molding the resin composition. Known methods to cause foaming are, for example, a method decomposing a foaming agent in a resin composition and a method injecting gas into a resin composition. There is also a recently studied method which injects a fluid in a supercritical state into a resin composition. Also, known methods for molding a resin composition include injection molding, for example. These methods for manufacturing a molded foam product are disclosed in, for example, Patent Literatures 1 to 5.

CITATION LIST

- Patent Literature

Patent Literature 1: JP 2002-067111 A
Patent Literature 2: JP 2003-231148 A
Patent Literature 3: JP 5283710 B
Patent Literature 4: JP 2010-173238 A
Patent Literature 5: WO 2011/001791 A1

SUMMARY OF INVENTION

- Technical Problem

In manufacture of a molded foam product, control of foaming is important. For example, uniform formation of fine air bubbles in a resin composition is required. The method injecting a fluid in a supercritical state into the resin composition is considered effective in this respect. Yet, a method that can further improve the heat insulation of molded foam products has been desired.

The present invention has been made in view of the above current state of the art, and aims to provide a method for efficiently manufacturing a molded foam product having excellent heat insulation, and a molded foam product obtained by such a method.

- Solution to Problem

A method including injection molding of a molten resin containing a fluid in a supercritical state can increase the foaming amount and produce a molded foam product having excellent heat insulation when it includes the step of moving a portion of a mold to increase the volume of a cavity before the molten resin injected into the cavity of the mold completely solidifies. The inventors have made further studies and found that by controlling the kind and amount of each of the resin material and the fluid which are used for the molten resin, a molded foam product can be produced which has a five-layer cross-sectional structure of a first unfoamed layer, a first foamed layer, a hollow space, a second foamed layer, and a second unfoamed layer included in the given order. The resulting structure gives excellent heat insulation to the manufactured molded foam products. The present invention is defined in the claims.

- Advantageous Effects of Invention

The method for manufacturing a molded foam product according to the present invention can form not only foamed layers containing fine air bubbles but also a hollow space inside molded foam products through injection molding using a fluid in a supercritical state as a foaming agent, enabling efficient manufacture of a molded foam product having excellent heat insulation. The molded foam product of the present invention has excellent heat insulation owing to foamed layers containing fine air bubbles and a hollow space formed in its inside.

BRIEF DESCRIPTION OF DRAWINGS

Fig. 1 is a schematic view illustrating an exemplary method for manufacturing a molded foam product using a supercritical injection molding apparatus.
Fig. 2 includes enlarged schematic cross-sectional views of a portion including the cavity of the mold shown in Fig. 1 for illustration of a core-back process; Fig. 2(a) shows the initial state before the core-back process, and Fig. 2(b) shows an expanded state after the core-back process.
Fig. 3 is an enlarged schematic cross-sectional view of a molded foam product having a five-layer structure which is manufactured by the method of the present invention.
Fig. 4 shows an exemplary molded foam product having a cup shape which is manufactured by the method of the present invention.
Fig. 5 is an enlarged schematic cross-sectional view of a molded foam product having a three-layer structure.

DESCRIPTION OF EMBODIMENTS

The method for manufacturing a molded foam product according to the present invention is defined in claim 1 and includes the steps of:
melting a resin composition containing a polyolefin and a polylactic acid and impregnating the resin composition with a fluid in a supercritical state to prepare a molten resin, and injecting the molten resin into a cavity formed in a mold and moving a portion of the mold to increase the volume of the cavity before the molten resin injected into the cavity completely solidifies, the fluid impregnated into the resin composition being a fluid of 0.05 to 4.0 wt% inert gas, the molded foam product at least partially having a five-layer cross-sectional structure of a first unfoamed layer, a first foamed layer, a hollow space, a second foamed layer, and a second unfoamed layer included in the given order.

In preparation of the molten resin, a molten resin composition is impregnated with a fluid in a supercritical state (hereinafter also referred to as a "supercritical fluid"). First, the resin composition is described in detail below.

The resin composition contains a polyolefin and a polylactic acid. A resin composition mainly containing a thermoplastic resin is suitable. The polyolefin and the polylactic acid are incompatible polymers which do not dissolve in each other and, when blended with each other, form an interface between them without dissolving in each other. Such an interface can therefore be utilized as a point where foaming starts (foaming point) in foaming using a supercritical fluid.

The polyolefin may contain one or both of polypropylene and polyethylene. The polypropylene has a melt mass-flow rate (MFR) of preferably from 5 to 100 g/10 min, more preferably from 10 to 50 g/10 min. The MFR of polypropylene is a value measured at a temperature of 230°C and a load of 21.2 N in accordance with JIS K7210. The polyethylene has an MFR of preferably from 5 to 100 g/10 min, more preferably from 10 to 50 g/10 min. The MFR of polyethylene is a value measured at a temperature of 190°C and a load of 21.2 N in accordance with JIS K7210.

The polyolefin may contain at least one of polypropylene and polyethylene alone, or may also contain polyolefin polymers other than polypropylene and polyethylene.

Examples of the other polyolefin species include $\alpha$-olefin homopolymers, ethylene-propylene copolymers, ethylene-$\alpha$-olefin copolymers, and propylene-$\alpha$-olefin copolymers. Examples of the $\alpha$-olefin include C4-C12 $\alpha$-olefins such as 1-butene, 1-pentene, 3-methyl-1-butene, 1-hexene, 3-methyl-1-pentene, 4-methyl-1-pentene, 3-ethyl-1-pentene, 1-octene, 1-decene, and 1-undecene.

The polyolefin preferably has a melt viscosity (220°C) of from 150 Pa·S to 400 Pa·S. The lower limit of the melt viscosity of the polyolefin is more preferably 200 Pa·S, and the upper limit thereof is more preferably 300 Pa·S. The melt viscosity can be measured with a "flow tester CFT-500D" available from Shimadzu Corporation, for example. Specifically, the viscosity characteristics can be evaluated by heating the resin under measurement to a given temperature to fluidize the resin, extruding the resin out of a cylinder through a capillary die (inner diameter: $\varphi$1 mm, length: 10 mm) using a piston at a given surface pressure (1 MPa), and measuring the distance and time for the piston movement.

The resin composition contains preferably from 30 to 80 wt% polyolefin. If the resin composition contains less than 30 wt% polyolefin, the resin composition may exhibit poor fluidity, decreased solidification speed, and poor moldability. If the resin composition contains more than 80 wt% polyolefin, the resin composition may exhibit poor foamability to give protrusions and recesses to the surface of the resulting molded foam product, spoiling the appearance. Also, in the case of blending the resin composition and a supercritical fluid, the resin composition is less likely to be impregnated with the supercritical fluid. The lower limit of the amount of the polyolefin in the resin composition is preferably 35 wt%, and the upper limit thereof is preferably 70 wt%.

The polylactic acid is an L-lactic acid or D-lactic acid homopolymer, an L-lactic acid/D-lactic acid copolymer, or any mixture of such homopolymers and copolymers. The crystallinity of the polylactic acid can be adjusted by copolymerizing (e.g., random, block, graft copolymerizing) lactic acid enantiomers with different enantiomeric ratios or by adding a crystal nucleating agent.

The polylactic acid has a melt viscosity (220°C) of from 150 Pa·S to 400 Pa·S. The lower limit of the melt viscosity of the polylactic acid is more preferably 200 Pa· S, and the upper limit thereof is more preferably 300 Pa·S. The melt viscosity of the polylactic acid can be measured by a procedure similar to that of measuring the melt viscosity of the polyolefin.

The resin composition contains preferably from 3 to 40 wt% polylactic acid. If the resin composition contains less than 3 wt% polylactic acid, the molded foam product obtained by foam molding the resin composition may be in an insufficiently foamed state. If the resin composition contains more than 40 wt% polylactic acid, the resin composition may exhibit poor fluidity, decreased solidification speed, and poor moldability. The lower limit of the amount of the polylactic acid in the resin composition is more preferably 8 wt%, and the upper limit thereof is more preferably 30 wt%.

With the amounts of the polyolefin and the polylactic acid falling within the ranges of 30 to 80 wt% and of 3 to 40 wt%, respectively, the fluidity of the resin composition can be adjusted, and the resin composition can exhibit favorable moldability.

The difference in melt viscosity between the polyolefin and the polylactic acid is preferably 200 Pa·S or less. With a difference in melt viscosity between the polyolefin and the polylactic acid of 200 Pa·S or less, these components can be more easily blended. The upper limit of the difference in melt viscosity between the polyolefin and the polylactic acid is more preferably 150 Pa·S.

The process of blending polymers incompatible with each other may be a process in which a chemical bond is formed between the components or a process in which a crosslinked structure is formed between polymers of the same species. In the case of obtaining a molded foam product using a polylactic acid, reactive extrusion (reactive processing) may be employed in which, for example, the composition is kneaded while a polylactic acid is synthesized using additives such as a synthetic catalyst (e.g., metal complex) and a radical generator. In the case of utilizing the interfaces between the polyolefin and the polylactic acid as points where foaming starts, addition of additives such as a synthetic catalyst and a radical generator to the resin composition is not necessary, unlike the reactive extrusion in which the composition is kneaded while the polylactic acid is synthesized. Examples of the reactive extrusion of a polylactic acid include a process in which L-lactide and ε-caprolactone are reacted using tin(II) 2-ethylhexanoate serving as the synthetic catalyst and an antioxidant (e.g., IRGANOX 1010 available from Ciba Specialty Chemicals); a process in which a polylactic acid and polyethylene glycol are reacted using a radical generator such as dicumyl peroxide; and a process in which a polymer such as polycarbonate, polybutylene adipate terephthalate (PBAT), polycaprolactone (PCL), polybutylene succinate (PBS), or polybutylene succinate adipate (PBSA) is graft-polymerized onto a polylactic acid using a radical generator.

According to the invention, the resin composition is a mixture of a polyolefin, a polylactic acid, and a modified polyolefin containing an intramolecular carbonyl group. Addition of the modified polyolefin containing a carbonyl group makes the polyolefin and the polylactic acid compatible with each other, increasing the dispersibility. This process produces a large number of fine air bubbles (foamed particles having a small particle size) uniformly inside the molded foam product, enabling manufacture of a molded foam product excellent in properties such as heat resistance, strength, and lightness as well as heat insulation.

Examples of the modified polyolefin containing a carbonyl group in a molecule include those obtained by addition reaction of a polyolefin with an unsaturated carboxylic acid, an ester of an unsaturated carboxylic acid, or an anhydride of an unsaturated carboxylic acid. Examples of the unsaturated carboxylic acid include maleic acid, fumaric acid, and itaconic acid. Examples of the ester of an unsaturated carboxylic acid include monomethyl maleate, monoethyl maleate, diethyl maleate, and monomethyl fumarate. Examples of the anhydride of an unsaturated carboxylic acid include itaconic anhydride and maleic anhydride. Examples of the modified polyolefin containing a carbonyl group in a molecule include maleic anhydride-modified polyolefins and glycidyl methacrylate-modified polyolefins. These modified polyolefins containing a carbonyl group in a molecule may be used alone or in combination.

The modified polyolefin containing a carbonyl group in a molecule may be a copolymer of an olefin and a vinyl monomer. Examples of the copolymer of an olefin and a vinyl monomer include ethylene-(meth)acrylic acid copolymers, ethylene-ethyl (meth)acrylate copolymers, and ethylene-methyl (meth)acrylate copolymers. The "(meth)acrylic acid" may be acrylic acid or methacrylic acid.

The modified polyolefin containing a carbonyl group in a molecule has an MFR of preferably from 0.1 to 100 g/10 min, more preferably from 0.3 to 50 g/10 min. The MFR is a value measured at a temperature of 230°C and a load of 21.2 N in accordance with JIS K7210.

The resin composition contains preferably from 1 to 20 wt% modified polyolefin containing a carbonyl group in a molecule. In the case where the resin composition contains the modified polyolefin containing a carbonyl group in a molecule in an amount within the above range, an interface can be formed between the polyolefin and the polylactic acid which are incompatible with each other, so that the dispersibility concerning these components can be improved. If the resin composition contains less than 1 wt% modified polyolefin containing a carbonyl group in a molecule, the resulting molded foam product may be in a poorly foamed state. If the resin composition contains more than 20 wt% modified polyolefin, odor emission, coloring, moldability deterioration, or a water absorption increase may occur. The lower limit of the amount of the modified polyolefin containing a carbonyl group in a molecule in the resin composition is more preferably 3 wt%, and the upper limit thereof is more preferably 12 wt%.

The resin composition may contain a layered silicate. In the case where the shear force during blending the polyolefin, the polylactic acid, and the modified polyolefin containing a carbonyl group is insufficient, adding a layered silicate improves the dispersion of the polylactic acid in the polyolefin, thereby highly dispersing foaming points in the resin composition.

Examples of the layered silicate include pyrophyllite, talc, kaolin (kaolinite), montmorillonite, apophyllite, margarite, prehnite, and mica. In particular, talc, kaolin, montmorillonite, and mica are suitable. These layered silicates may be used alone or in combination.

The resin composition contains preferably from 10 to 40 wt% layered silicate. If the resin composition contains less than 10 wt% layered silicate, the effect of enhancing the shear force during blending may be insufficient. If the resin composition contains more than 40 wt% layered silicate, the resin composition may exhibit poor moldability. The lower limit of the amount of the layered silicate in the resin composition is more preferably 15 wt%, and the upper limit thereof is more preferably 35 wt%.

The resin composition may contain a filler other than the layered silicate. The filler, in the case of being formed of an inorganic material, may be, for example, a metal oxide (e.g., magnesium oxide, calcium oxide), graphite, carbon black, molybdenum disulfide, tungsten disulfide, calcium carbonate, silica, silica gel, zeolite, boron nitride, or alumina. The filler, in the case of being formed of an organic material, may be, for example, a fluorine resin (e.g., polytetrafluoroethylene (PTFE)), ultrahigh molecular weight polyethylene, electron beam-crosslinked polyethylene, an aromatic polyamide, an aliphatic polyamide, silicon carbide, an acrylic resin, a phenolic resin, or a melamine resin. The resin composition may contain any amount of the filler other than the layered silicate as long as the amount does not exceed 1 wt% of the resin composition, for example.

In the step in which a molten resin is prepared, the resin composition is impregnated with a supercritical fluid of 0.05 to 4.0 wt% inert gas. The supercritical fluid can be generated by a known supercritical fluid generator. Examples of the inert gas used for the supercritical fluid include carbon dioxide, nitrogen, argon, and helium. In particular, a supercritical fluid of carbon dioxide or nitrogen is preferred, and a supercritical fluid of nitrogen is more preferred. The filling amount of the supercritical fluid (also referred to interchangeably as inert gas) can be calculated from the following formula (1).

```
Filling amount (unit: wt%) of supercritical fluid = [(flow
rate of supercritical fluid × inlet time of supercritical
fluid × conversion factor 27.8)/weight of foamable resin
composition] × 100      (1)
```

If the filling amount of the inert gas is less than 0.05 wt%, foaming in the molten resin will be insufficient. If the filling amount of the inert gas is more than 4.0 wt%, the first and second unfoamed layers will have an insufficient thickness, giving significantly poor surface smoothness to the resulting molded foam product. The molten resin is preferably a single-phase melt of a resin composition and a supercritical fluid. Such a molten resin can be produced by injecting a supercritical fluid into a molten resin composition under high pressure, and further stirring the mixture.

The present invention utilizes injection molding in which the molten resin is injected into the cavity of the mold. The injection molding includes injecting a molten resin containing a supercritical fluid into a cavity of a mold, followed by causing the resin to cool and solidify. This enables manufacture of molded products having fine and various shapes according to the shape of the cavity of the mold. Also, when the pressure onto the molten resin containing a supercritical fluid is dropped during injection molding, a phase transition of the supercritical fluid to the gaseous phase occurs, generating air bubbles in the molten resin. Thereby, a molded foam product containing fine air bubbles is obtained. With a large number of points where foaming starts (foaming points) uniformly distributed in the molten resin, the amount of air bubbles can be increased.

The present invention includes the process of moving a portion of the mold to increase the volume of the cavity before the molten resin injected into the cavity completely solidifies (hereinafter, this step is also referred to as a "core-back process"). When the cavity is forcibly expanded in the state where the molten resin is partially or wholly melted, a rapid pressure drop is caused, so that the foaming amount is significantly increased. This process can generate air bubbles throughout the entire inside of the molten resin injected into the cavity. The mold typically includes a male mold having a protruding shape and a female mold having a recessed shape. The space formed by the male mold and the female mold fitted to each other constitutes the cavity into which the molten resin is injected. At least a portion of the male mold and/or the female mold is moved to increase the volume of the cavity. Here, in cases where the male mold is a movable component and the female mold is a stationary component, the entire male mold is preferably moved to increase the volume of the cavity.

The core-back process is preferably started within the range of immediately after injection of the molten resin into the cavity is completed (zero seconds after completion of the injection) to five seconds after completion of the injection. The mold is preferably moved at a moving speed (core-back process speed) of 0.1 mm/sec or faster. The expansion amount of the gap size of the mold by the core-back process (i.e., core-back process range) is preferably from 0.5 mm to 10 mm.

The gap size of the mold, in the cavity defining the shape of the molded foam product, defines the thickness of the molded foam product. The mold has a gap size in the cavity during injection of the molten resin (before the core-back process) of preferably from 0.2 mm to 3.5 mm, more preferably from 0.4 mm to 1.6 mm. The mold having a gap size smaller than 0.2 mm may fail to cause sufficient foaming in the molten resin, producing a product that includes an unfoamed portion with no air bubbles. In portions of the mold where the gap size is greater than 3.5 mm, the time required for cooling and solidification is longer. With such a portion, the molded foam product may be deformed in ejection of the molded product from the mold or due to foam residues (foamable portions in the molten resin which has insufficiently solidified). The present invention can prevent blisters on the surface and foaming failure even in the case of manufacturing a molded foam product designed to have a small thickness, so that the manufactured molded foam product has a light weight and excellent heat insulation as compared with conventional products.

The production of the molten resin containing a supercritical fluid and foam molding of the molten resin can be conducted with, for example, a supercritical injection molding apparatus including an injection molding machine and a supercritical fluid generator connected to each other. Examples of the supercritical injection molding apparatus include a MuCell injection molding machine (MuCell is a registered trademark of Trexel. Co., Ltd.).

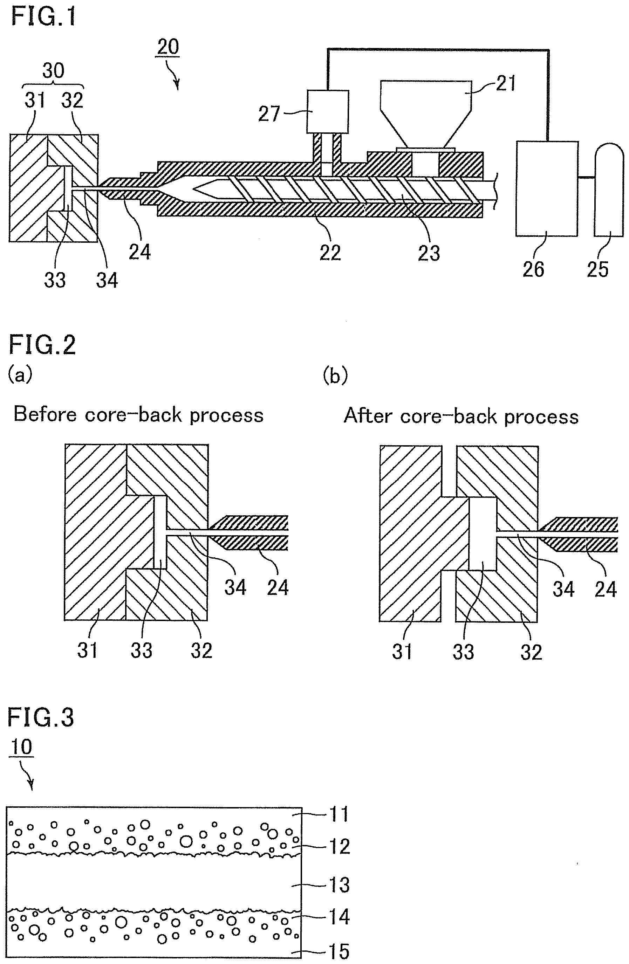

Fig. 1 is a schematic view illustrating an exemplary method for manufacturing a molded foam product using a supercritical injection molding apparatus. A supercritical injection molding apparatus 20 shown in Fig. 1 includes an injection molding machine connected to a supercritical fluid generator. The injection molding machine includes a hopper 21, a heating cylinder 22, a screw 23, and a nozzle 24. The supercritical fluid generator includes a gas bottle 25, a supercritical fluid generator 26, and an injection controller 27.

The hopper 21 includes a vessel that stores a resin material fed into the hopper 21 and drops an appropriate amount of the resin material into the heating cylinder 22 through its bottom opening, which is closable. Examples of the resin material fed into the hopper 21 include pellets of a resin composition produced by melt-kneading a mixture of ingredients with an extruder. Non-limiting examples of the extruder include uniaxial or multiaxial various extruders. Preferred are, for example, biaxial extruders whose temperature is set to 200°C or higher. The ingredients may be kneaded batchwise, or desired ingredients may be kneaded first and then may be kneaded together with the rest of the ingredients. The heating cylinder 22 is capable of heating the inside of a cylindrical space and melting the resin material.

The gas bottle 25 encloses an inert gas which is an ingredient of the supercritical fluid. The inert gas is introduced from the gas bottle 25 to the supercritical fluid generator 26 where the gas becomes a supercritical fluid. The supercritical fluid generated in the supercritical fluid generator 26 is fed into the heating cylinder 22 through the injection controller 27. The injection controller 27 is configured to control the amount of the supercritical fluid to be injected into the resin material that is melt in the heating cylinder 22.

The screw 23 is movable while turning inside the heating cylinder 22 and is configured to push the molten resin material and the supercritical fluid, while blending them together, to the end of the heating cylinder 22. The blending produces a single-phase melt of the molten resin material and the supercritical fluid (i.e., molten resin containing a supercritical fluid). The molten resin containing a supercritical fluid is pushed and transported to the nozzle 24 by the screw 23, so that the molten resin containing a supercritical fluid is injected into the mold 30 through the nozzle 24 at an appropriate injection rate.

The mold 30 includes a male mold 31 having a protruding shape and a female mold 32 having a recessed shape. The male mold 31 and the female mold 32 form a cavity 33 in between. The molten resin coming out of the nozzle 24 is injected into the cavity 33 through a runner 34. The pressure is dropped in the mold 30, and when the pressure reaches the critical pressure, a phase transition of the supercritical fluid to the gaseous phase occurs, generating air bubbles in the molten resin. Then, as shown in Fig. 2, the male mold 31 is moved back before the molten resin cools and solidifies, so that the cavity 33 is expanded, i.e., the core-back process is performed. This accelerates the pressure drop in the mold and thereby promotes foaming in the molten resin in the cavity 33. Fig. 2 includes enlarged schematic cross-sectional views of a portion including the cavity of the mold shown in Fig. 1 for illustration of the core-back process; Fig. 2(a) shows the initial state before the core-back process, and Fig. 2(b) shows an expanded state after the core-back process.

Fig. 3 is an enlarged schematic cross-sectional view of a molded foam product having a five-layer structure which is manufactured by the method of the present invention. The molded foam product 10 herein at least partially has a five-layer cross-sectional structure of a first unfoamed layer 11, a first foamed layer 12, a hollow space 13, a second foamed layer 14, and a second unfoamed layer 15 included in the given order. In other words, the molded foam product 10 having a five-layer cross-sectional structure and heat insulation can be obtained through a single step of injection molding utilizing a supercritical fluid as a foaming agent. This allows reduction in the number of molding steps and a high degree of freedom in shape of the molded foam product 10 to be manufactured. The molded foam product 10, including the hollow space 13 in its inside, also has excellent heat insulation. With the first foamed layer 12, hollow space 13, second foamed layer 14, and the compositions of these layers, the molded foam product 10 also has excellent cushioning properties. The molded foam product 10 shown in Fig. 3 is an exemplary molded foam product manufactured by the method of the present invention.

A molded foam product manufactured by the method for manufacturing a molded foam product according to the present invention (hereinafter, also referred to as a molded foam product of the present invention) is also one aspect of the present invention. In other words, the molded foam product of the present invention at least partially has a five-layer cross-sectional structure of a first unfoamed layer, a first foamed layer, a hollow space, a second foamed layer, and a second unfoamed layer included in the given order. The first unfoamed layer, first foamed layer, second foamed layer, and second unfoamed layer each contain a polyolefin and a polylactic acid.

The first unfoamed layer and the second unfoamed layer are regions containing no air bubbles (foamed particles) in the resin and constitute the surface of the molded foam product. The molded foam product having the first unfoamed layer and the second unfoamed layer in its surface exhibits high strength and has a smooth surface. The first unfoamed layer 11 and the second unfoamed layer 15 may have any thickness, but preferably has a thickness of 0.1 mm or greater.

The first foamed layer and the second foamed layer are each a region containing a large number of air bubbles (foamed particles) in the resin. The first foamed layer and the second foamed layer each preferably contain 100 or more foamed particles in a 1 mm × 1 mm cross-sectional region thereof. Any randomly selected 100 foamed particles preferably have an average particle size of 100 $\mu$m or smaller. The foamed particles can be measured with a scanning electron microscope (SEM) such as "S-4800" available from Hitachi High-Technologies Corporation. The foamed layers contribute to reduced weight, heat resistance, and heat insulation of the molded foam product. The first foamed layer 12 and the second foamed layer 14 may each have any thickness, but each preferably have a thickness of 0.1 mm or greater.

The hollow space is an air layer formed between the first foamed layer and the second foamed layer by solidification of the molten resin in the cavity which starts from the point where the molten resin is in contact with the mold.

The first foamed layer and the second foamed layer solidify while foaming, and thus have protrusions and recesses in their surface facing the hollow space, which is an air layer. Also, protrusions and recesses finer than those in the surfaces of the foamed layers facing the hollow space are formed in the surface of the container. These fine protrusions and recesses give the texture of Japanese paper to the appearance of the molded foam product.

Random patterns, colors, or letters, for example, may be provided to the surface or any other part of the molded foam product. In the case of providing such patterns, additives such as pigment filler and a color masterbatch can be added to the resin composition.

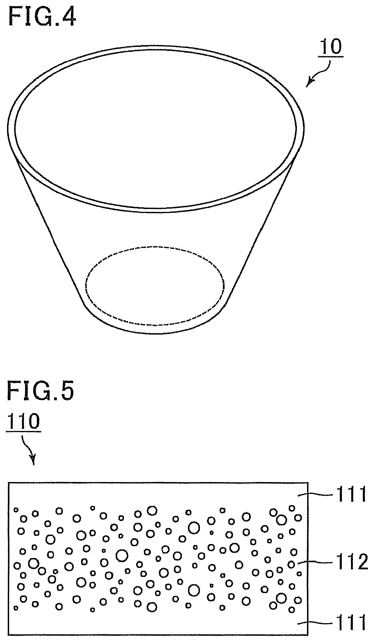

The molded foam product may have any shape, but preferably has a cup shape with a base and a side surface. This is because the molded foam product can exhibit heat insulation owing to air bubbles and is thus suitable as a heat-resistant container. Fig. 4 shows an exemplary molded foam product having a cup shape which is manufactured by the method of the present invention.

Molded foam products manufactured by the method of the present invention may be used without any limitation. Yet, since the molded foam products are excellent in heat resistance and heat insulation and have a light weight, they are suitable as, for example, products such as food containers, daily necessities, and home appliances, particularly as food containers. The molded foam product has excellent heat resistance and passes the following JIS S2029 tests: 7.4 Heat resistance test (heat-resistant temperature on the label: 120°C); 7.10 Test of suitability for high frequency of microwave oven; and 7.11 Test of durability in a microwave oven. Hence, food containers formed of the molded foam product can be heated in a microwave or used for microwave cooking.

EXAMPLES

Hereinafter, the present invention is described in more detail based on examples. The examples, however, are not intended to limit the scope of the present invention.

(Example 1)

Polypropylene (PP) (50 wt%), a polylactic acid (PLA) (20 wt%), a modified polyolefin containing a carbonyl group in a molecule (10 wt%), and talc (20 wt%) were dry-blended, and then kneaded with a twin-screw extruder ("TEX30" available from The Japan Steel Works, Ltd.) whose temperature was set to 220°C, so that a foamable resin composition in the form of pellets was obtained. The obtained foamable resin composition contained the polylactic acid particles dispersed in polypropylene. The following Table 1 shows the manufacturers and physical properties of the ingredients.

[Table 1]

|  | Manufacturer | Product No. | Physical property |
|---|---|---|---|
| Polypropylene (polyolefin) | Prime Polymer Co., Ltd. | J106G | MFR (230°C): 15 g/10 min Melt viscosity (220°C); 390 Pa·S |
| Polylactic acid | Unitika Ltd. | TERRAMAC TE-2000 | MFR (190°C): 12 g/10 min Melt viscosity (220°C): 260 Pa·S |
| Modified polyolefin containing carbonyl group in molecule | Prime Polymer Co., Ltd. | ZP648 | MFR (230°C): 0.6 g/10 min |
| Talc (layered silicate) | Nippon Talc Co., Ltd. | P-3 | Density: 2.70 g/cm$^3$ |

The obtained pellets of the foamable resin composition were fed into an injection molding machine equipped with a supercritical generator (Toshiba Machine Co., Ltd.). The foamable resin composition was blended with a super-critical fluid of nitrogen ($N_2$) (filling amount: 0.05 wt%, filling pressure: 16 MPa) while being melted in a cylinder whose temperature was set to 200°C. The filling amount (unit: wt%) of the supercritical fluid was calculated from the above formula (1).

The molten resin blended with a supercritical fluid was injected into the cavity 33 of the mold having the shape shown in Fig. 2(a) through a gate (resin injection port) at an injection rate of 100 mm/sec and a screw backpressure of 15 MPa. The mold temperature was 60°C.

One second after the start of injecting the molten resin into the cavity 33, the core-back process was conducted. Specifically, the male mold 31 of the mold was moved back 6 mm to increase the volume of the cavity 33, so that foaming in the molten resin was accelerated. After the molten resin completely solidified, the molded foam product was taken out.

(Examples 2 to 7 and Comparative Examples 1 to 5)

A molded foam product was produced as in Example 1, except that the ingredients and amounts of the resin material and the supercritical fluid which were contained in the foamable resin composition and conduction of the core-back process were varied as shown in the following Table 2.

(Evaluation on molded foam product)

The cross-sectional structure, heat insulation, appearance, and molding properties of the molded foam products produced in the examples and comparative examples were evaluated by the following methods. The results are shown in the following Table 2.

(1) Cross-sectional structure

A cut was made in the surface of each molded foam product with a cutting tool, followed by splitting the molded foam product. The exposed cross section of the molded foam product was visually observed to see whether or not the molded foam product had a hollow space.

The molded foam products produced in the examples all had a cup shape with a base and a side surface as shown in Fig. 4 and had a minimum thickness of 0.2 mm. All of them also had the five-layer cross-sectional structure as shown in Fig. 3. In the following Table 2, the molded foam products having a hollow space had the five-layer cross-sectional structure as shown in Fig. 3 while the molded foam products having no hollow space had the three-layer cross-sectional structure as shown in Fig. 5. Fig. 5 is an enlarged schematic cross-sectional view of a molded foam product having a three-layer structure. As shown in Fig. 5, with no hollow space, the molded foam product has a three-layer structure of an unfoamed layer 111/a foamed layer 112/an unfoamed layer 111 included in the given order.

(2) Heat insulation

Each molded foam product was sprayed with a black body spray ("THI-1B" available from Tasco Japan Co.

Ltd.) and the solvent contained in the black body spray was dried indoors over a time period within the range of 12 hours to 24 hours. Thereby, a black-colored measurement sample having a cup shape was produced. Into the measurement sample was poured boiling water (100 ml) and, three minutes later, the temperature of the outer surface of the measurement sample was measured with an infrared thermometer ("TVS-200" available from Nippon Avionics Co., Ltd.) whose emissivity was controlled to 0.94.

The measurement sample was evaluated as good (marked as "oo") when the measured surface temperature was 60°C or lower, evaluated as fair (marked as "o") when the measured surface temperature was higher than 60°C but 65°C or lower, and evaluated as poor (marked as "x") when the measured surface temperature was higher than 65°C.

(2) Appearance

The surface of each molded foam product was visually observed. The molded foam product was evaluated as accepted (marked as "o") when it satisfied both of the following two conditions, and evaluated as rejected (marked as "x") when it failed to satisfy one or both of the following two conditions.

- The product has the texture of Japanese paper.
- The product has no blisters or creases.

The texture of Japanese paper is obtained when fine protrusions and recesses are formed in the surface of the molded foam product by foaming.

(4) Molding properties

In each of the examples and comparative examples, 100 samples of the molded foam product were prepared by conducting injection molding 100 times. The molded foam product was evaluated as accepted (marked as "○") when it satisfied both of the following two conditions, and evaluated as rejected (marked as "×") when it failed to satisfy one or both of the following two conditions.

- None of the 100 times of injection molding caused insufficient filling (visual observation).
- The molten resin cooled and solidified within 45 seconds in the 60°C mold.

[Table 2]

| | Resin material | Supercritical fluid | Filling amount (wt%) | Core-back process | Hollow space | Heat insulation | Appearance | Molding properties |
|---|---|---|---|---|---|---|---|---|
| Example 1 | PP+PLA | $N_2$ | 0.05 | Conducted | Formed | ○ | ○ | ○ |
| Example 2 | PP+PLA | $N_2$ | 0.2 | Conducted | Formed | ○ | ○ | ○ |
| Example 3 | PP+PLA | $N_2$ | 0.8 | Conducted | Formed | ○○ | ○ | ○ |
| Example 4 | PP+PLA | $N_2$ | 1.2 | Conducted | Formed | ○○ | ○ | ○ |
| Example 5 | PP+PLA | $CO_2$ | 1.5 | Conducted | Formed | ○ | ○ | ○ |
| Example 6 | PP+PLA | $CO_2$ | 2.7 | Conducted | Formed | ○○ | ○ | ○ |
| Example 7 | PP+PLA | $CO_2$ | 4.0 | Conducted | Formed | ○○ | ○ | ○ |
| Comparative Example 1 | PP+PLA | $N_2$ | 0.2 | Not conducted | Not formed | × | × | ○ |
| Comparative Example 2 | PP+PLA | $N_2$ | 1.2 | Not conducted | Not formed | × | × | ○ |
| Comparative Example 3 | PP+PLA | $CO_2$ | 1.5 | Not conducted | Not formed | × | × | ○ |
| Comparative Example 4 | PP | $N_2$ | 0.8 | Conducted | Formed | × | × | ○ |
| Comparative Example 5 | PLA | $N_2$ | 0.8 | Conducted | Formed | o | × | × |

REFERENCE SIGNS LIST

| | |
|---|---|
| 10 | Molded foam product |
| 11 | First unfoamed layer |
| 12 | First foamed layer |
| 13 | Hollow space |
| 14 | Second foamed layer |
| 15 | Second unfoamed layer |
| 20 | Supercritical injection molding apparatus |
| 21 | Hopper |
| 22 | Heating cylinder |
| 23 | Screw |
| 24 | Nozzle |
| 25 | Gas bottle |
| 26 | Supercritical fluid generator |
| 27 | Injection controller |
| 30 | Mold |
| 31 | Male mold |
| 32 | Female mold |
| 33 | Cavity |
| 34 | Runner |
| 110 | Molded foam product |
| 111 | Unfoamed layer |
| 112 | Foamed layer |

**Claims**

1. A method for manufacturing a molded foam product (10), which partially has a five-layer cross-sectional structure of a first unfoamed layer (11), a first foamed layer (12), a hollow space (13), a second foamed layer (14), and a second unfoamed layer (15) included in the given order, comprising the steps of:

   melting a resin composition containing a polyolefin and a polylactic acid and impregnating the resin composition with a fluid in a supercritical state to prepare a molten resin, and
   injecting the molten resin into a cavity formed in a mold and moving a portion of the mold (30) to increase the volume of the cavity (33) before the molten resin injected into the cavity completely solidifies,
   the fluid impregnated into the resin composition being a fluid of 0.05 to 4.0 wt% inert gas,
   **characterized in that**
   the resin composition further contains a modified polyolefin containing an intramolecular carbonyl group.

2. The method for manufacturing a molded foam product according to claim 1, wherein difference in melt viscosity at 220°C between the polyolefin and the polylactic acid is 200 Pa·S or less.

3. The method for manufacturing a molded foam product according to claim 1 or 2, wherein the polyolefin has a melt viscosity at 220°C of from 150 Pa·S to 400 Pa·S.

4. The method for manufacturing a molded foam product according to any one of claims 1 to 3, wherein the polylactic acid has a melt viscosity at 220°C of from 150 Pa·S to 400 Pa·S.

5. The method for manufacturing a molded foam product according to any one of claims 1 to 4, wherein the polyolefin includes at least one selected from the group consisting of polyethylene and polypropylene.

6. The method for manufacturing a molded foam product according to any one of claims 1 to 5, wherein the resin composition contains 30 to 80 wt% of the polyolefin, 3 to 40 wt% of the polylactic acid, and 1 to 20 wt% of the modified polyolefin containing an intramolecular carbonyl group.

**7.** A molded foam product (10) partially comprising

a five-layer cross-sectional structure of a first unfoamed layer (11), a first foamed layer (12), a hollow space (13), a second foamed layer (14), and a second unfoamed layer (15) included in the given order,

the first unfoamed layer (11), the first foamed layer (12), the second foamed layer (14), and the second unfoamed layer (15) each containing a polyolefin and a polylactic acid,

**characterized in that**

each of said first and second foamed layers and first and second unfoamed layers further contains a modified polyolefin containing an intramolecular carbonyl group.

**8.** The molded foam product according to claim 7, wherein the polyolefin includes at least one selected from the group consisting of polyethylene and polypropylene.

**9.** The molded foam product according to claim 7 or 8, wherein the resin composition contains 30 to 80 wt% of the polyolefin, 3 to 40 wt% of the polylactic acid, and 1 to 20 wt% of the modified polyolefin containing an intramolecular carbonyl group.

**Patentansprüche**

**1.** Verfahren zur Herstellung eines Formschaumproduktes (10), das teilweise eine fünfschichtige Querschnittsstruktur aus einer ersten ungeschäumten Schicht (11), einer ersten geschäumten Schicht (12), einem Hohlraum (13), einer zweiten geschäumten Schicht (14) und einer zweiten ungeschäumten Schicht (15), die in der genannten Reihenfolge enthalten sind, aufweist, umfassend die Schritte des:

Schmelzens einer Harzzusammensetzung, die ein Polyolefin und eine Polymilchsäure enthält, und Imprägnierens der Harzzusammensetzung mit einem Fluid in einem überkritischen Zustand, um ein geschmolzenes Harz herzustellen, und

Einspritzens des geschmolzenen Harzes in eine Kavität, die in einer Gussform ausgebildet ist, und Bewegens eines Teils der Gussform (30), um das Volumen der Kavität (33) zu vergrößern, bevor das in die Kavität eingespritzte geschmolzene Harz sich vollständig verfestigt,

wobei das Fluid, mit dem die Harzzusammensetzung imprägniert ist, ein Fluid mit 0,05 bis 4,0 Gew.-% Inertgas ist,

**dadurch gekennzeichnet, dass**

die Harzzusammensetzung ferner ein modifiziertes Polyolefin enthält, das eine intramolekulare Carbonylgruppe aufweist.

**2.** Verfahren zur Herstellung eines Formschaumproduktes nach Anspruch 1, wobei die Differenz der Schmelzviskosität bei 220 °C zwischen dem Polyolefin und der Polymilchsäure 200 Pa·S oder weniger beträgt.

**3.** Verfahren zur Herstellung eines Formschaumproduktes nach Anspruch 1 oder 2, wobei das Polyolefin bei 220 °C eine Schmelzviskosität von 150 Pa·S bis 400 Pa·S aufweist.

**4.** Verfahren zur Herstellung eines Formschaumproduktes nach einem der Ansprüche 1 bis 3, wobei die Polymilchsäure bei 220 °C eine Schmelzviskosität von 150 Pa·S bis 400 Pa·S aufweist.

**5.** Verfahren zur Herstellung eines Formschaumproduktes nach einem der Ansprüche 1 bis 4, wobei das Polyolefin wenigstens eines aus der aus Polyethylen und Polypropylen bestehenden Gruppe enthält.

**6.** Verfahren zur Herstellung eines Formschaumproduktes nach einem der Ansprüche 1 bis 5, wobei die Harzzusammensetzung 30 bis 80 Gew.-% des Polyolefins, 3 bis 40 Gew.-% der Polymilchsäure und 1 bis 20 Gew.-% des modifizierten Polyolefins enthält, das eine intramolekulare Carbonylgruppe aufweist.

**7.** Formschaumprodukt (10), teilweise umfassend:

eine fünfschichtige Querschnittsstruktur aus einer ersten ungeschäumten Schicht (11), einer ersten geschäumten Schicht (12), einem Hohlraum (13), einer zweiten geschäumten Schicht (14) und einer zweiten ungeschäumten Schicht (15), die in der genannten Reihenfolge enthalten sind,

wobei die erste ungeschäumte Schicht (11), die erste geschäumte Schicht (12), die zweite geschäumte Schicht (14) und die zweite ungeschäumte Schicht (15) jeweils ein Polyolefin und eine Polymilchsäure enthalten, **dadurch gekennzeichnet, dass**
jede der ersten und zweiten geschäumten Schichten und der ersten und zweiten ungeschäumten Schichten ferner ein modifiziertes Polyolefin enthält, das eine intramolekulare Carbonylgruppe aufweist.

**8.** Formschaumprodukt nach Anspruch 7, wobei das Polyolefin wenigstens eines aus der aus Polyethylen und Polypropylen bestehenden Gruppe enthält.

**9.** Formschaumprodukt nach Anspruch 7 oder 8, wobei die Harzzusammensetzung 30 bis 80 Gew.-% des Polyolefins, 3 bis 40 Gew.-% der Polymilchsäure und 1 bis 20 Gew.-% des modifizierten Polyolefins enthält, das eine intramolekulare Carbonylgruppe aufweist.

**Revendications**

**1.** Procédé pour la fabrication d'un produit de mousse moulé (10), qui présente partiellement une structure transversale à cinq couches d'une première couche non expansée (11), une première couche expansée (12), un espace creux (13), une seconde couche expansée (14), et une seconde couche non expansée (15) incluses dans l'ordre donné, comprenant les étapes de :

fusion d'une composition de résine contenant une polyoléfine et un poly(acide lactique) et imprégnation de la composition de résine avec un fluide dans un état supercritique pour préparer une résine fondue, et
injection de la résine fondue dans une cavité formée dans un moule et déplacement d'une portion du moule (30) pour augmenter le volume de la cavité (33) avant que la résine fondue injectée dans la cavité solidifie complètement,
le fluide imprégné dans la composition de résine étant un fluide de 0,05 à 4,0 % en masse de gaz inerte, **caractérisé en ce que**
la composition de résine contient de plus une polyoléfine modifiée contenant un groupe carbonyle intramoléculaire.

**2.** Procédé pour la fabrication d'un produit de mousse moulé selon la revendication 1, dans lequel la différence de viscosité à l'état fondu à 220°C entre la polyoléfine et le poly(acide lactique) est de 200 Pa.S ou inférieure.

**3.** Procédé pour la fabrication d'un produit de mousse moulé selon la revendication 1 ou 2, dans lequel la polyoléfine présente une viscosité à l'état fondu à 220°C de 150 Pa.S à 400 Pa.S.

**4.** Procédé pour la fabrication d'un produit de mousse moulé selon l'une quelconque des revendications 1 à 3, dans lequel le poly(acide lactique) présente une viscosité à l'état fondu à 220°C de 150 Pa.S à 400 Pa.S.

**5.** Procédé pour la fabrication d'un produit de mousse moulé selon l'une quelconque des revendications 1 à 4, dans lequel la polyoléfine inclut au moins un choisi dans le groupe consistant en polyéthylène et polypropylène.

**6.** Procédé pour la fabrication d'un produit de mousse moulé selon l'une quelconque des revendications 1 à 5, dans lequel la composition de résine contient de 30 à 80 % en masse de la polyoléfine, de 3 à 40 % en masse du poly(acide lactique), et de 1 à 20 % en masse de la polyoléfine modifiée contenant un groupe carbonyle intramoléculaire.

**7.** Produit de mousse moulé (10) comprenant partiellement
une structure transversale à cinq couches d'une première couche non expansée (11), une première couche expansée (12), un espace creux (13), une seconde couche expansée (14), et une seconde couche non expansée (15) incluses dans l'ordre donné,
la première couche non expansée (11), la première couche expansée (12), la seconde couche expansée (14), et la seconde couche non expansée (15) contenant chacune une polyoléfine et un poly(acide lactique), **caractérisé en ce que**
chacune desdites première et seconde couches expansées et première et seconde couches non expansées contient de plus une polyoléfine modifiée contenant un groupe carbonyle intramoléculaire.

**8.** Produit de mousse moulé selon la revendication 7, dans lequel la polyoléfine inclut au moins un choisi dans le groupe consistant en polyéthylène et polypropylène.

**9.** Produit de mousse moulé selon la revendication 7 ou 8, dans lequel la composition de résine contient de 30 à 80 % en masse de la polyoléfine, de 3 à 40 % en masse du poly(acide lactique), et de 1 à 20 % en masse de la polyoléfine modifiée contenant un groupe carbonyle intramoléculaire.

## FIG.1

## FIG.2

(a)

(b)

Before core-back process

After core-back process

## FIG.3

FIG.4

10

FIG.5

110

111

112

111

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002067111 A
- JP 2003231148 A
- JP 5283710 B
- JP 2010173238 A
- WO 2011001791 A1